# EUROPÄISCHE PATENTANMELDUNG

(11) **EP 1 246 478 A1**
(43) Veröffentlichungstag der Anmeldung: **02.10.2002**
(21) Anmeldenummer: 01122449.0
(22) Anmeldetag: 20.09.2001
(51) Int. Cl.: H04Q 7/22

(54) **Verfahren und Telekommunikationsendgerät zum Austausch von SMS-Nachrichten**

(71) Anmelder: SIEMENS AKTIENGESELLSCHAFT, 80333 München (DE)
(72) Erfinder: Buschhorn, Uwe, 90419 Nürnberg (DE); Zechlin, Oliver, 90547 Stein (DE)

(57) **Zusammenfassung**

Die Erfindung betrifft ein Verfahren und ein Telekommunikationsendgerät zum Austausch von SMS-Machrichten, wobei der SMS-Nachricht an einer vordenfinierten Stelle ein Identifizierungscode eingefügt wird.

## Beschreibung

Verfahren und Telekommunikationsendgerät zum Austausch von SMS-Nachrichten.

Die Erfindung betrifft ein Verfahren zum Austausch von SMS-Nachrichten mit Absenderkennung und Nachrichtentext, wobei in einem ersten Telekommunikationsendgerät eine SMS-Nachricht erstellt und über ein Mobilfunknetz mit einer Absenderkennung an mindestens ein zweites Telekommunikationsendgerät verschickt wird.

Des weiteren betrifft die Erfindung auch ein Telekommunikationsendgerät, vorzugsweise ein Mobiltelefon, mit Mitteln zum Austausch von SMS-Nachrichten mit Absenderkennung und Nachrichtentext.

Sowohl das Verfahren zum Versenden von SMS-Nachrichten mit Absenderkennung und Nachrichtentext, als auch Mobilfunkgeräte mit welchen solche SMS-Nachrichten einschließlich Absenderkennung und Nachrichtentext versendet werden können sind allgemein bekannt.

Das Versenden von SMS-Nachrichten erfreut sich allgemein großer Beliebtheit, wobei Diensteanbieter das Versenden von SMS-Nachrichten zum Teil kostenlos anbieten, wenn der Absender damit einverstanden ist, daß zusätzliche Werbemaßnahmen mit der Absendung der SMS-Nachricht verbunden sind. Werden solche SMS-Nachrichten also nicht direkt von einem Telekommunikationsendgerät mit der entsprechenden individuellen Absenderkennung verschickt, so erhält der Empfänger eine SMS-Nachricht, welche die Absenderkennung des Diensteanbieters aufweist und besteht für den Empfänger das Problem der Identifizierung der eigentlichen schreibenden Person der SMS-Nachricht, wodurch es zum Teil zu Konfusionen kommen kann.

Es ist daher Aufgabe der Erfindung, ein Verfahren und ein Telekommunikationsendgerät anzugeben, welche es ermöglichen auch bei der Versendung von SMS-Nachrichten über die genannten Dienste eine eindeutige Identifizierung des tatsächlich Schreibenden der SMS-Nachricht zu ermöglichen.

Diese Aufgabe wird durch die Merkmale der unabhängigen Patentansprüche gelöst. Vorteilhafte Weiterbildungen der Erfindung sind Gegenstand untergeordneter Ansprüche.

Entsprechend dem Erfindungsgedanken schlagen die Erfinder vor, das an sich bekannte Verfahren zum Austausch von SMS-Nachrichten mit Absenderkennung und Nachrichtentext, bei dem in einem ersten Telekommunikationsendgerät eine SMS-Nachricht erstellt und über ein Mobilfunknetz mit einer Absenderkennung an mindestens ein zweites Telekommunikationsendgerät verschickt wird, dahingehend zu verbessern, dass der SMS-Nachricht an einer vordefinierten Stelle ein Identifizierungscode eingefügt wird.

Dieser Identifizierungscode kann individuell die schreibende Person der SMS-Nachricht identifizieren, so daß der Empfänger aufgrund des Identifizierungscodes die tatsächlich schreibende Person erkennen kann, obwohl die Absenderkennung lediglich der Erkennung eines Massenversenders von SMS-Nachrichten zugeordnet ist.

In einer Verbesserung des Verfahrens wird vorgeschlagen, dass der Identifizierungscode zum Text des SMS-Nachricht hinzugefügt und vorzugsweise durch mindestens ein Abgrenzungszeichen vom Text des SMS-Nachricht getrennt wird. Durch diese Maßnahme besteht die Möglichkeit, daß das empfangende Gerät der SMS-Nachricht, welches beispielsweise ein Handy oder ein mit einem Funknetz verbundener Organizer sein kann, den Identifizierungscode individuell und unabhängig von seiner Länge detektieren und in einem entsprechenden Feld auf dem Display anzeigen kann. Solch ein Identifizierungscode kann beispielsweise zu Beginn oder am Ende der Nachricht angeordnet sein, wobei es hierbei möglich ist, durch eine Vereinbarung die Länge des Identifizierungscodes zu bestimmen, so dass alleine aufgrund der vordefinierten Stelle und der Länge des Identifizierungscodes dieser aus dem Text der eigentlichen SMS-Nachricht herausgeschnitten werden kann.

Eine andere Alternative zur Unterbringung des Identifizierungscodes kann darin bestehen, dass er der Absenderkennung der SMS-Nachricht hinzugefügt wird, wobei auch hier vorzugsweise Abgrenzungszeichen von der Absenderkennung der SMS-Nachricht vorgesehen werden können, die den Identifizierungscode von der Absenderkennung trennen.

Als Identifizierungscode schlagen die Erfinder beispielsweise den Namen, die Telefonnummer oder ein individuelles Kürzel des Absenders vor. Bei Verwendung eines solchen Kürzel kann beispielsweise zusätzlich in einer Tabelle, die sich im empfangenden Telekommunikationsendgeräte befindet, dieses mit den vorhandenen Eintragungen verglichen werden, so dass bei einer Übereinstimmung die zugehörige Eintragung, beispielsweise eine vollständige Adresse oder sonstige zusätzliche Informationen, angezeigt wird.

Zusätzlich schlagen die Erfinder vor, dass der Identifizierungscode bei seiner Eingabe in einem T9-Texterkennungsmodus geschrieben werden kann. Bei diesem T9-Texterkennungsverfahren handelt es sich um ein Texterkennungssystem, bei dem aufgrund der Tastenfolge der mehrfach belegten Buchstabentasten auf einem Handy, mit Hilfe von Wahrscheinlichkeitsberechnungen das richtige eingegebene Wort gefunden werden soll, obwohl die mehrfach belegten Tasten lediglich ein einziges Mal für einen der sich dahinter verbergenden Buchstaben gedrückt wird. Nähere Informationen über die Funktionsweise dieses Texterkennungsverfahrens sind auf den Internet-Seiten www.t9.com, www.slangsoft.com/PDF/j@pan%20Inc.pdf und www.yorku.ca/mack/chi00.html zu finden.

Neben dem erfindungsgemäßen Verfahren schlagen die Erfinder weiterhin auch ein Telekommunikationsendgerät, vorzugsweise ein Mobiltelefon, mit Mitteln zum Austausch von SMS-Nachrichten mit Absenderkennung und Nachrichtentext vor, dahingehend zu verbessern, dass Mittel, vorzugsweise Programm-Mittel, vorgesehen sind, welche der SMS-Nachricht an einer vordefinierten Stelle einen Identifizierungscode einfügen.

Außerdem wird für ein empfangendes Telekommunikationsendgerät vorgeschlagen, dass Mittel, vorzugsweise Programm-Mittel, vorgesehen sind, welche einen, in der SMS-Nachricht an einer vordefinierten Stelle eingefügten Identifizierungscode erkennen und als Absender der SMS-Nachricht anzeigen.

In einer vorteilhaften Ausführung dieses erfindungsgemäßen Telekommunikationsendgerätes wird weiterhin vorgeschlagen, dass Mittel zur Einfügung mindestens eines Abgrenzungszeichen zwischen Identifizierungscode und Text beziehungsweise Absenderkennung der SMS-Nachricht vorgesehen sind.

Entsprechend dem oben beschriebenen Verfahren wird auch zusätzlich vorgeschlagen, dass eine Tabelle im erfindungsgemäßen Telekommunikationsendgerät vorgesehen wird, welche Kürzel und zugehörige Absenderdaten enthält, wobei außerdem Vergleichsmittel bereit gehalten werden, die im empfangenden Telekommunikationsendgerät den Identifizierungscode eingehender SMS-Nachrichten mit der Tabelle vergleichen und die zugehörige Eintragung anzeigen können.

Eine weitere Verbesserung dieses erfindungsgemäßen Telekommunikationsendgerätes kann darin bestehen, dass zusätzlich Mittel zur Unterdrückung der Anzeige des Identifizierungscodes bei der Anzeige des Textes oder einer Grafik der SMS-Nachricht zur Verfügung stehen. Hierdurch wird es möglich, insbesondere bei anzuzeigenden Grafiken, das keine störenden Einschübe in der übermittelten Nachricht zu sehen sind.

Des weiteren schlagen die Erfinder auch vor, dass das Telekommunikationsendgerät für die Eingabe des Identifizierungscodes Mittel zur Anwendung des T9-Texterkennungsverfahrens aufweist, so dass auch in diesem Bereich eine problemlose Eingabe über eine mehrfach belegte Tastatur eines Handys möglich ist.

Im folgenden wird die Erfindung anhand eines bevorzugten Ausführungsbeispieles mit Hilfe der Figuren näher beschrieben. Es zeigen im einzelnen:
- Figur 1:: Verfahrensablauf einer Eingabe einer SMS mit I-dentifizierungscode;
- Figur 2:: Darstellung des Empfangs einer SMS mit Identifizierungscode, Teil 1;
- Figur 3:: Darstellung des Empfangs einer SMS mit Identifizierungscode, Teil 2.

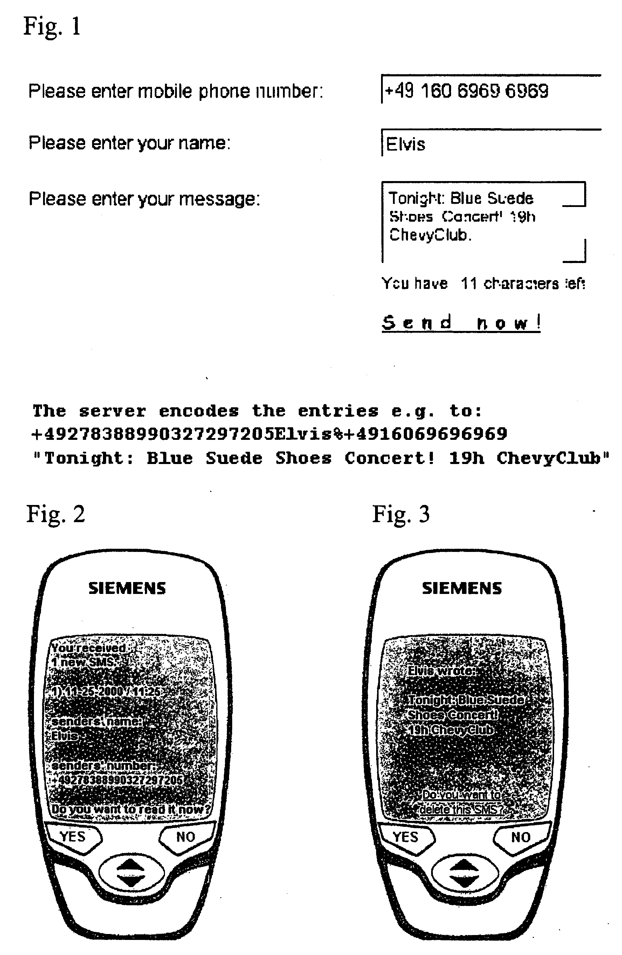

Die Figur 1 zeigt ein Beispiel einer Eingabe einer SMS mit dem erfindungsgemäßen Identifizierungscode. Hier wird in der ersten Zeile abgefragt, an welche Telefonnummer die SMS zu verschicken ist. In der zweiten Zeile wird vom Handy der Name beziehungsweise der Identifizierungscode des Senders abgefragt und vom Sender in ein entsprechendes Feld eingegeben. Danach erfolgt die Eingabe der eigentlichen SMS-Nachricht, die nach Betätigung der Absendetaste auf dem Handy mit der nachfolgenden Zeichenfolge abgesendet wird:
+49278388990327297205Elvis%+4916069696969 "Tonight: Blue Suede Shoes Concert! 19h ChevyClub".

Die Figur 2 zeigt beispielhaft den Empfang der oben dargestellten Nachricht. Hier wird angegeben, dass zunächst eine neue SMS unter dem Datum: 25.11.2000 um 11.25 Uhr empfangen wurde. Zusätzlich wird der Name des Senders: "Elvis" und die Nummer des Senders: +49278388990327297205 angezeigt. Bei dieser angezeigten Nummer handelt es sich jedoch um einen Massenversender von SMS-Nachrichten, durch die keine eindeutige Identifizierung des Senders möglich ist, wobei jedoch der oben angezeigte Name, das heißt der zusätzliche Identifizierungscode eine eindeutige Zuordnung der SMS-Nachricht erlaubt. Schließlich wird der Nutzer des Handy gefragt, ob er die Nachricht nun lesen möchte.

Nach Bejahung dieser Frage wird - wie in Figur 3 dargestellt - die SMS-Nachricht "Tonight: Blue Suede Shoes Concert! 19h ChevyClub" unter der Angabe des Namens des Senders "Elvis" angezeigt.

Es ist also mit diesem erfindungsgemäßen Verfahren zum Versenden von SMS und einem entsprechenden Telekommunikationsendgerät nun möglich, auch über Massenversender Nachrichten so zu verschicken, dass sich eine eindeutige Identifizierung des Absenders durch die Eingabe eines entsprechendes Identifizierungscodes ergibt.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

**2.** Verfahren gemäß dem voranstehenden Patentanspruch 1, **dadurch gekennzeichnet, dass** der Identifizierungscode zum Text des SMS-Nachricht hinzugefügt und vorzugsweise durch mindestens ein Abgrenzungszeichen vom Text des SMS-Nachricht getrennt wird.

**3.** Verfahren gemäß einem der vorstehenden Ansprüche 1 bis 2, **dadurch gekennzeichnet, dass** der Identifizierungscode zu Beginn der SMS-Nachricht angeordnet wird.

**4.** Verfahren gemäß einem der vorstehenden Ansprüche 1 bis 2, **dadurch gekennzeichnet, dass** der Identifizierungscode am Ende der SMS-Nachricht angeordnet wird.

**5.** Verfahren gemäß dem voranstehenden Patentanspruch 1, **dadurch gekennzeichnet, dass** der Identifizierungscode zur Absenderkennung der SMS-Nachricht hinzugefügt und vorzugsweise durch mindestens ein Abgrenzungszeichen von der Absenderkennung der SMS-Nachricht getrennt wird.

**6.** Verfahren gemäß einem der vorstehenden Ansprüche 1 bis 5, **dadurch gekennzeichnet, dass** als Identifizierungscode zumindest teilweise der Name des Absenders verwendet wird.

**7.** Verfahren gemäß einem der vorstehenden Ansprüche 1 bis 6, **dadurch gekennzeichnet, dass** als Identifizierungscode zumindest teilweise die Telefonnummer des Absenders verwendet wird.

**8.** Verfahren gemäß einem der vorstehenden Ansprüche 1 bis 6, **dadurch gekennzeichnet, dass** als Identifizierungscode ein Kürzel verwendet wird.

**9.** Verfahren gemäß dem voranstehenden Patentanspruch 8, **dadurch gekennzeichnet, daß** das Kürzel mit einer Tabelle des empfangenden Telekommunikationsendgerätes verglichen wird und die zugehörige Eintragung angezeigt wird.

**10.** Verfahren gemäß einem der vorstehenden Ansprüche 1 bis 9, **dadurch gekennzeichnet, dass** der Identifizierungscode im T9-Texterkennungsmodus geschrieben werden kann.

**11.** Telekommunikationsendgerät, vorzugsweise Mobiltelefon, mit Mitteln zum Austausch von SMS-Nachrichten mit Absenderkennung und Nachrichtentext, **dadurch gekenn-zeichnet,dass** Mittel, vorzugsweise Programm-Mittel, vorgesehen sind, welche der SMS-Nachricht an einer vordefinierten Stelle einen Identifizierungscode einfügen.

**12.** Telekommunikationsendgerät gemäß dem Oberbegriff des voranstehenden Patentanspruches 11 oder gemäß dem voranstehenden Patentanspruch 11, **dadurch gekennzeichnet, dass** Mittel, vorzugsweise Programm-Mittel, vorgesehen sind, welche einen, in der SMS-Nachricht an einer vordefinierten Stelle eingefügten, Identifizierungscode erkennen und als Absender der SMS-Nachricht anzeigen.

**13.** Telekommunikationsendgerät gemäß einem der voranstehenden Patentansprüche 11 bis 12, **dadurch gekennzeichnet, dass** Mittel zur Einfügung mindestens eines Abgrenzungszeichen zwischen Identifizierungscode und Text oder Absenderkennung der SMS-Nachricht vorgesehen sind.

**14.** Telekommunikationsendgerät gemäß einem der voranstehenden Patentansprüche 11 bis 13, **dadurch gekennzeichnet, daß** eine Tabelle vorgesehen wird, welche Kürzel und zugehörige Absenderdaten enthält, wobei außerdem Vergleichsmittel vorgesehen sind, die im empfangenden Telekommunikationsendgerätes den Identifizierungscode eingehender SMS-Nachrichten mit der Tabelle vergleichen und die zugehörige Eintragung anzeigen.

**15.** Telekommunikationsendgerät gemäß einem der vorstehenden Ansprüche 11 bis 14, **dadurch gekennzeichnet, dass** Mittel zur Unterdrückung der Anzeige des Identifizierungscodes bei der Anzeige des Textes oder einer Grafik der SMS-Nachricht vorgesehen sind.

**16.** Telekommunikationsendgerät gemäß einem der vorstehenden Ansprüche 11 bis 15, **dadurch gekennzeichnet, dass** für die Eingabe des Identifizierungscodes Mittel zur Anwendung des T9-Texterkennungsverfahrens vorgesehen sind.

## Geänderte Patentansprüche

### Geänderte Patentansprüche gemäss Regel 86(2) EPÜ.

**1.** Verfahren zum Austausch von SMS-Nachrichten mit Absenderkennung und Nachrichtentext, wobei in einem ersten Telekommunikationsendgerät eine SMS-Nachricht erstellt und über ein Mobilfunknetz mit einer Absenderkennung an mindestens ein zweites Telekommunikationsendgerät verschickt wird, **dadurch gekennzeichnet, dass** der SMS-Nachricht an einer vordefinierten Stelle ein Identifizierungscode eingefügt wird.

**2.** Verfahren gemäß dem voranstehenden Patentanspruch 1, **dadurch gekennzeichnet, dass** der Identifizierungscode zum Text des SMS-Nachricht hinzugefügt und vorzugsweise durch mindestens ein Abgrenzungszeichen vom Text des SMS-Nachricht getrennt wird.

**3.** Verfahren gemäß einem der vorstehenden Ansprüche 1 bis 2, **dadurch gekennzeichnet, dass** der Identifizierungscode zu Beginn der SMS-Nachricht angeordnet wird.

**4.** Verfahren gemäß einem der vorstehenden Ansprüche 1 bis 2, **dadurch gekennzeichnet, dass** der Identifizierungscode am Ende der SMS-Nachricht angeordnet wird.

**5.** Verfahren gemäß dem voranstehenden Patentanspruch 1, **dadurch gekennzeichnet, dass** der Identifizierungscode zur Absenderkennung der SMS-Nachricht hinzugefügt und vorzugsweise durch mindestens ein Abgrenzungszeichen von der Absenderkennung der SMS-Nachricht getrennt wird.

**6.** Verfahren gemäß einem der vorstehenden Ansprüche 1 bis 5, **dadurch gekennzeichnet, dass** als Identifizierungscode zumindest teilweise der Name des Absenders verwendet wird.

**7.** Verfahren gemäß einem der vorstehenden Ansprüche 1 bis 6, **dadurch gekennzeichnet, dass** als Identifizierungscode zumindest teilweise die Telefonnummer des Absenders verwendet wird.

**8.** Verfahren gemäß einem der vorstehenden Ansprüche 1 bis 6, **dadurch gekennzeichnet, dass** als Identifizierungscode ein Kürzel verwendet wird.

**9.** Verfahren gemäß dem voranstehenden Patentanspruch 8, **dadurch gekennzeichnet, daß** das Kürzel mit einer Tabelle des empfangenden Telekommunikationsendgerätes verglichen wird und die zugehörige Eintragung angezeigt wird.

**10.** Verfahren gemäß einem der vorstehenden Ansprüche 1 bis 9, **dadurch gekennzeichnet, dass** der Identifizierungscode im T9-Texterkennungsmodus geschrieben werden kann.

**11.** Telekommunikationsendgerät, vorzugsweise Mobiltelefon, mit Mitteln zum Austausch von SMS-Nachrichten mit Absenderkennung und Nachrichtentext, **dadurch gekennzeichnet, dass** Mittel, vorzugsweise Programm-Mittel, vorgesehen sind, welche der SMS-Nachricht an einer vordefinierten Stelle einen Identifizierungscode einfügen.

**12.** Telekommunikationsendgerät gemäß dem Oberbegriff des voranstehenden Patentanspruches 11 oder gemäß dem voranstehenden Patentanspruch 11, **dadurch gekennzeichnet, dass** Mittel, vorzugsweise Programm-Mittel, vorgesehen sind, welche einen, in der SMS-Nachricht an einer vordefinierten Stelle eingefügten, Identifizierungscode erkennen und als Absender der SMS-Nachricht anzeigen.

**13.** Telekommunikationsendgerät gemäß einem der voranstehenden Patentansprüche 11 bis 12, **dadurch gekennzeichnet, dass** Mittel zur Einfügung mindestens eines Abgrenzungszeichen zwischen Identifizierungscode und Text oder Absenderkennung der SMS-Nachricht vorgesehen sind.

**14.** Telekommunikationsendgerät gemäß einem der voranstehenden Patentansprüche 11 bis 13, **dadurch gekennzeichnet, daß** eine Tabelle vorgesehen wird, welche Kürzel und zugehörige Absenderdaten enthält, wobei außerdem Vergleichsmittel vorgesehen sind, die im empfangenden Telekommunikationsendgerätes den Identifizierungscode eingehender SMS-Nachrichten mit der Tabelle vergleichen und die zugehörige Eintragung anzeigen.

**15.** Telekommunikationsendgerät gemäß einem der vorstehenden Ansprüche 11 bis 14, **dadurch gekennzeichnet, dass** Mittel zur Unterdrückung der Anzeige des Identifizierungscodes bei der Anzeige des Textes oder einer Grafik der SMS-Nachricht vorgesehen sind.

**16.** Telekommunikationsendgerät gemäß einem der vorstehenden Ansprüche 11 bis 15, **dadurch gekennzeichnet, dass** für die Eingabe des Identifizierungscodes Mittel zur Anwendung des T9-Texterkennungsverfahrens vorgesehen sind.
